# EUROPÄISCHE PATENTANMELDUNG

(11) **EP 1 422 351 A1**
(43) Veröffentlichungstag der Anmeldung: **26.05.2004**
(21) Anmeldenummer: 03025802.4
(22) Anmeldetag: 10.11.2003
(51) Int. Cl.: E03C 1/10

(54) **Systemtrenner**

(30) Priorität: 22.11.2002 DE 20218121 U
(71) Anmelder: Vollmer, Rudolf, 74821 Mosbach (DE)
(72) Erfinder: Vollmer, Rudolf, 74821 Mosbach (DE)

(57) **Zusammenfassung**

Ein Systemtrenner weist ein Gehäuse (1) zur Aufnahme eines eingangsseitigen Rückflussverhinderers (8) und eines ausgangsseitigen Rückflussverhinderers (9) auf, die auf einer gemeinsamen Achse angeordnet sind. An eine Mittelkammer (11) zwischen beiden Rückflussverhinderern (8,9) ist ein Ablassventil (2,17,18) angeschlossen. Das Ablassventil (2,17,18) wird durch einen Stufenkolben (2) gebildet, der gegen die Innenwand des Gehäuses (1) abgedichtet (4,5) ist, und ein Ringraum (6) zwischen dem Stufenkolben (2) und der Innenwand des Gehäuses (1) ist über eine Bohrung (3) in dem Stufenkolben (2) mit der Mittelkammer (11) verbunden.

## Beschreibung

Die Erfindung betrifft einen Systemtrenner nach dem Gattungsbegriff des Patentanspruches 1. Ein derartiger Systemtrenner ist aus der DE 2424978 C2 bekannt. Bei diesem Systemtrenner ist der eingangsseitige Rückflussverhinderer radial dichtend, axial gegen eine vorgespannte Druckfeder verschiebbar in einem Gehäuse angeordnet.

Die Rückseite des Gehäuses des Rückflussverhinderers ist am größten Durchmesser mit einer Ventilsitzkante versehen, die mit einer ortsfesten Dichtung als Ablassventil zusammenwirkt. Ventilsitzdurchmesser und Durchmesser der Abdichtung des Gehäuses müssen bei dieser Lösung immer gleich groß gewählt werden, damit das Öffnungs- und Schließverhalten des Ablassventils unabhängig vom jeweiligen Betriebsdruck gewährleistet ist.

Nachteilig wirkt sich bei dieser Lösung aus, dass der Durchmesser des Steuerkolbens nicht größer als der Ventilsitzdurchmesser des Ablassventils gewählt werden kann. Dadurch steigt der Differenzdruck, der zur Aufbringung der notwendigen Stellkräfte zur Überwindung der Reibung und zur Erreichung eines dichten Abschlusses des Ablassventils notwendig ist, über das zulässige Maß an. Außerdem ist die Anbringung des geforderten Prüfstutzens zur Messung des Druckes in der Mittelkammer nur mit erheblich höherem Kostenaufwand möglich. Aus diesen Gründen hat sich dieser Systemtrenner nicht durchgesetzt.

Aus der DE 198 54 951 C2 ist ein Systemtrenner bekannt, bei dem der eingangsseitige Rückflussverhinderer in einem mit einem Metallfaltenbalg dicht verbundenen Rohr angeordnet ist, wobei das ausgangsseitige Ende des Metallfaltenbalges als Ventilsitz ausgebildet ist und der Durchmesser des Ventilsitzes dem wirksamen Durchmesser des Metallfaltenbalges entspricht. Die Übereinstimmung der Durchmesser ist notwendig, damit das Öffnungs- und Schließverhalten des Ablassventils unabhängig vom jeweiligen Betriebsdruck gewährleistet ist. Die geforderte Genauigkeit beim öffnen und Schließen des Ablassventils wird bei diesem Gerät durch die nahezu reibungsfreie Arbeitsweise des Metallfaltenbalges erreicht. Nachteilig bei diesem Gerät sind die hohen Herstellkosten.

Die DE 32 21 036 C2 betrifft ebenfalls einen Systemtrenner mit Kolbensteuerung und axialer Ventilanordnung. Der Steuerkolben dieses Systemtrenners ist nur einseitig mit dem Eingangsdruck beaufschlagt, der mit der auf der Gegenseite des Kolbens angeordneten Druckfeder zusammenwirkt. Der Ansprechdruck ist damit auf einen fest vorgegebenen Eingangsdruck festgelegt, unabhängig von dem die Durchflussrichtung bestimmenden Differenzdruck. Da dieser Systemtrenner nicht auf den Differenzdruck reagiert kann er nur eingeschränkte Sicherheit gegen Rückfließen bieten. Folgerichtig ist dieser Systemtrenner nach den geltenden Normen nur für ein geringeres Gefährdungsrisiko zugelassen. Außerdem sind die Herstellkosten aufgrund der großen Abmessungen und der Vielzahl von Einzelteilen zu hoch.

Der Neuerung liegt die Aufgabe zugrunde, einen Systemtrenner zu schaffen, der die beschriebenen Nachteile bekannter Systemtrenner vermeidet, geringes Gewicht und kleine Abmessungen aufweist, sich einfach an abzusichernde Apparate wie Wassernachbehandlungsgeräte, Hochdruckreiniger u.s.w. anbauen lässt, die geforderten Ansprechtoleranzen einhält und billig in Großserie herstellbar ist.

Diese Aufgabe wird neuerungsgemäß gelöst durch die kennzeichnenden Merkmale des Patentanspruches 1. Weitere vorteilhafte Ausgestaltungen des erfindungsgemäßen Systemtrenners können den abhängigen Patentansprüchen entnommen werden.

Anhand eines in den Fig. 1; 2; 3; und 4 der beigefügten Zeichnungen dargestellten Ausführungsbeispieles sei die Erfindung im Folgenden näher erläutert.

Es zeigen:
Fig. 1 einen Axialschnitt durch den neuerungsgemäßen Systemtrenner;
Fig. 2 einen direkt an den nicht näher dargestellten Apparat angeflanschten Systemtrenner im Axialschnitt;
Fig. 3 einen Systemtrenner mit Bajonettverschluss;
Fig. 4 einen in Höhe der Mittelkammer geteilten Systemtrenner, wobei die ausgangsseitige Gehäusehälfte gleichzeitig Anschlussdeckel des abzusichernden Apparates ist.

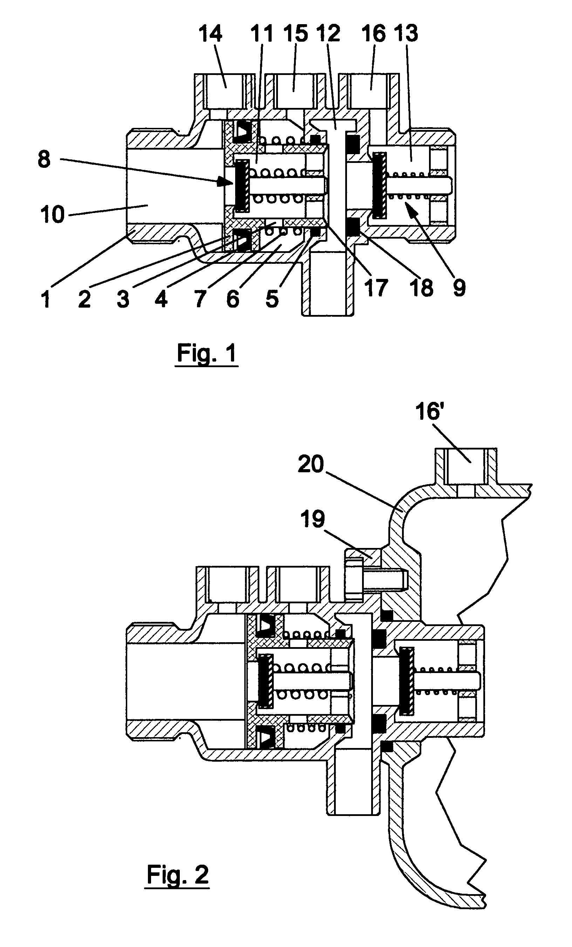

Gemäß Fig. 1 besteht ein Systemtrenner aus einem Gehäuse 1 , einem Stufenkolben 2 mit mindesten einer Radialbohrung 3 , einer ersten Dichtung 4 und einer zweiten Dichtung 5 , einer Ringkammer 6 , einer Druckfeder 7 , einem eingangsseitigen Rückflussverhinderer 8 , einem ausgangsseitigen Rückflussverhinderer 9 , einer Eingangskammer 10 , einer Mittelkammer 11 mit einem Ablasskanal 12, einer Ausgangskammer 13 und Prüfstutzen 14, 15 und 16; einer Ventilsitzkante 17 und einem Ventilsitz 18.

Gemäß Fig. 2 ist der Systemtrenner mit einem Flansch 19 zum Anschluss an einen abzusichernden Apparat 20 mit einem Prüfstutzen 16' versehen.

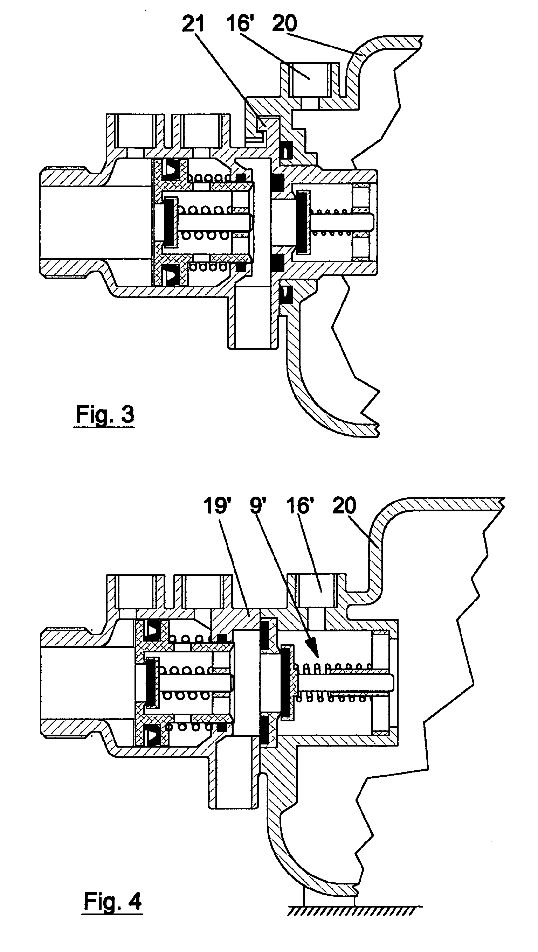

Gemäß Fig. 3 ist der Systemtrenner mittels eines Bajonettverschlusses 21 an den abzusichernden Apparat 20 angeschlossen.

Gemäß Fig. 4 ist der ausgangsseitige Rückflussverhinderer 9' mit dem Ventilsitz 18' im Deckel des abzusichernden Apparates 20 angeordnet und durch einen Flansch 19' des Systemtrenners, der die restlichen Funktionseinheiten 8, 2 enthält gehalten.

Anhand des vorstehend beschriebenen Aufbaues ergibt sich folgende Funktionsweise des erfindungsgemäßen Systemtrenners:

Das Durchflussmedium Wasser tritt in die Eingangskammer 10 ein und baut den über den Prüfstutzen 14 messbaren Eingangsdruck auf. Beim Überschreiten eines durch die Druckfeder 7 vorbestimmten Druckes verschiebt sich der Stufenkolben 2 gegen die Druckfeder 7 bis die Ventilsitzkante 17 an dem Ventilsitz 18 zur Anlage kommt. Ein weiterer Druckanstieg dient der Aufbringung der für den dichten Ventilabschluss notwendigen Schließkraft. Übersteigt der Eingangsdruck die Vorspannkraft der Schließfeder des eingangsseitigen Rückflussverhinderers 8 , so öffnet sich dieser und füllt die Mittelkammer 11 und die damit über die Bohrung 3 hydraulisch verbundene Ringkammer 6 auf. Da die Ringkammer den gleichen Druck wie die Mittelkammer aufweist, kann der Prüfstutzen 15 zur Messung des Mittelkammerdruckes problemlos und platzsparend direkt an der Ringkammer 6 angebracht werden. Bei weiterem Druckanstieg öffnet der ausgangsseitige Rückflussverhinderer 9 und füllt die Ausgangskammer 13 auf, sodass von der Eingangskammer 10 zur Mittelkammer 11 und Ausgangskammer 13 ein Druckgefälle in Fließrichtung aufgebaut ist. Dieses Druckgefälle wird zur Überprüfung der Funktion bei den vorgeschriebenen Wartungen an den Prüfstutzen 14,15,16 oder 16' gemessen. Um ein Rückfließen oder Rückdrücken sicher zu vermeiden muss das Ablassventil 17, 18 vor dem Unterschreiten eines festgelegten Differenzdruckes von 0,14 bar zwischen Eingangskammer 10 und Mittelkammer 11 öffnen, die Mittelkammer 11 belüften und dies unabhängig vom gerade herrschenden Betriebsdruck. Auf den Stufenkolben 2 wirken in Schließrichtung des Ablassventils 17, 18 der eingangsseitige Druck auf die gesamte Fläche des Stufenkolbens 2 und in entgegengesetzter Richtung, also in öffnendem Sinne, wirken die vorgespannte Druckfeder 7 und der Mittelkammerdruck auf die durch die Ventilsitzkante 17 begrenzte Sitzfläche und auf die Stirnfläche der Ringkammer 6. Beide Flächen zusammen ergeben wiederum die volle Kolbenfläche des Stufenkolbens 2. Es ist damit sichergestellt, dass die Steuerung des Ablassventils 17, 18 nur vom Differenzdruck zwischen Eingangskammer 10 und Mittelkammer 11 und vollkommen unabhängig vom jeweiligen Betriebsdruck erfolgt. In weiterer Ausgestaltung des erfindungsgemäßen Systemtrenners ist dieser zur Verringerung der Einbaulänge mit einem Flansch 19 oder einem Bajonettverschluss 21 zum direkten Anbau auf den nicht näher dargestellten Apparat 20 versehen, wobei der ausgangsseitige Prüfstutzen 16' ebenfalls am abzusichemden Apparat 20 angebracht ist.

Die Fig.4 zeigt die Teilung des Systemtrenners, wobei der ausgangsseitige Rückflussverhinderer 9 und der Ventilsitz 18' mit dem Prüfstutzen 16' im abzusichernden Apparat 20 untergebracht sind und durch den angeflanschten Restteil des Systemtrenners gehalten werden.

## Patentansprüche

1. Systemtrenner, aufweisend ein Gehäuse ( 1 ) zur Aufnahme eines eingangsseitigen Rückflussverhinderers ( 8 ) und eines ausgangsseitigen Rückflussverhinderers ( 9 ), die auf einer gemeinsamen Achse angeordnet sind und mit einem an eine Mittelkammer ( 11 ) zwischen beiden Rückflussverhinderem ( 8, 9 ) angeschlossenem Ablassventil ( 2, 17, 18 ), **dadurch gekennzeichnet, dass** das Ablassventil ( 2, 17, 18 ) durch einen Stufenkolben ( 2 ) gebildet wird, der gegen die Innenwand des Gehäuses ( 1 ) abgedichtet ( 4, 5 ) ist und dass ein Ringraum ( 6 ) zwischen dem Stufenkolben ( 2 ) und der Innenwand des Gehäuses ( 1 ) über eine Bohrung ( 3 ) in dem Stufenkolben ( 2 ) mit der Mittelkammer ( 11 ) verbunden ist.

2. einen Ablasskanal ( 12 ) des Ablassventils ( 2, 17, 18 ) abdichtet.

3. Systemtrenner nach Anspruch 2, **dadurch gekennzeichnet, dass** er über einen Flansch ( 19 ), Bajonettverschluss ( 21 ) usw. mit einem abSystemtrenner nach Anspruch 1, **dadurch gekennzeichnet, dass** eine erste Dichtung ( 4 ) den Stufenkolben ( 2 ) gegen die Eingangskammer ( 10 ) abdichtet und dass eine zweite Dichtung ( 5 ) den Stufenkolben ( 2 ) gegen zusichernden Apparat ( 20 ) verbindbar ist.

4. Systemtrenner nach Anspruch 3, **dadurch gekennzeichnet, dass** der ausgangsseitige Rückflussverhinderer ( 9' ) und ein Ventilsitz (18' ) des Ablassventils ( 2, 17, 18 ) in dem abzusichernden Apparat ( 20 ) angeordnet sind, mit welchem der Systemtrenner mit den restlichen Funktionseinheiten ( 8, 2 ) verbunden ist.

5. Systemtrenner nach Anspruch 1 oder einer der folgenden Ansprüche, **gekennzeichnet durch** Prüfstutzen ( 14, 15, 16 ) an dem Gehäuse ( 1 ) zur Abnahme des Druckes in der Eingangskammer (10 ), der Mittelkammer ( 11 ) und der Ausgangskammer ( 13 ).

6. Systemtrenner nach Anspruch 4, **dadurch gekennzeichnet, dass** ein Prüfstutzen ( 16' ) für den Ausgangsdruck an dem abzusichernden Gerät ( 20 ) angeordnet ist.

7. Systemtrenner nach Anspruch 5, **dadurch gekennzeichnet, dass** der Prüfstutzen ( 15 ) für den Mitteldruck an den Ringraum ( 6 ) angeschlossen ist.
